# EUROPEAN PATENT SPECIFICATION

(11) **EP 2 271 473 B1**
(45) Date of publication and mention of the grant of the patent: **14.11.2018**
(21) Application number: 09728631.4
(22) Date of filing: 01.04.2009
(51) Int. Cl.: B29C 45/73

(54) **INJECTION MOULDING PROCESS**
SPRITZGUSSVERFAHREN
PROCESSUS DE MOULAGE PAR INJECTION

(30) Priority: 01.04.2008 GB 0805904
(43) Date of publication of application: 12.01.2011
(73) Proprietor: Reckitt Benckiser Finish B.V., 2132 WT Hoofddorp (NL)
(72) Inventor: HUBER, Andreas, Wien A-1050 (AT); HUBER, Markus, Jagenbach A-3923 (AT); HUBER, Simone, Wien A-1050 (AT); VAN DIEPEN, Jacobus, Simon, Petrus, Ludwigshafen 67059 (DE); WIEDEMANN, Ralf, I-30034 Mira VE (IT)
(74) Representative: Hodgetts, Catherine Dawn
(86) International application number: PCT/GB2009/000872
(87) International publication number: WO 2009/122177

(56) References cited:
- EP-A1- 1 460 107
- EP-A1- 1 795 560
- WO-A-99/30892
- GB-A- 2 370 554
- JP-A- 2004 262 145
- US-A- 2 331 702
- US-A- 4 358 420
- US-A- 4 622 002
- US-A- 5 852 329

## Description

The present invention relates to an injection moulding process.

The use of injection moulding to form articles is well known, see for example JP07171868, GB1266560, US 2002/162940. The use of injection moulding facilitates the production of attractive articles easily and at low cost.

However, the use of injection moulding for forming articles is not without its own associated issues.

It is known that when moulding some polymers it is beneficial to have the moulding temperature between the glass transition temperature and the melting point of the polymer (see JP2003192884). The thermoplastic materials used for forming the articles (e.g. polymers such as polyethylene) have a high viscosity when molten. Thus the injection moulding pressure has to be high, meaning that the moulds and the moulding equipment have to be designed to be able to operate at such high pressures. The high pressure machinery is expensive and difficult to operate.

Furthermore, even at high injection pressure required, the flow properties of the article forming materials are still poor. Thus the moulds have to be shallow so that the pathway of the injected material is short. If the pathway of the injected material is too long, the finished article, when removed from the mould, can suffer from incomplete article walls. To counter this problem the flow pathways within the mould have to be wide to allow for sufficient material flow.

An additional problem with injection moulding is that of thermal stressing of the article. Material, such as thermoplastic resin, is typically injection moulded at a temperature well above its melting temperature in a mould which is well below the processing temperature (F. Johannaber, Kunststoffmaschinenfuhrer, C. Hanser Verlag, 1992, 237). The sudden cooling on injection moulding has been found to create internal stresses within the article. These stresses can weaken the article and make it difficult to remove the article from the mould without causing damage. This is particularly the case for those thermoplastic materials which show little shrinkage after cooling and/or which exhibit a low fracture resistance. Document GB-A-2370554 discloses the injection molding of a multi-compartment PVOH container. The present invention seeks to address one or more of the above disadvantages. The invention is defined by the combination of features of claim 1. According to a first aspect of the present disclosure there is provided a method of forming an article by injection moulding a molten thermoplastic material into a mould, wherein for or during the injection moulding process the mould is actively heated, the mould being at an elevated temperature, below the melting point of the thermoplastic material, throughout the injection moulding process.

In accordance with a second aspect of the present disclosure there is provided a method of forming an article by injection moulding a molten thermoplastic material into a mould, wherein during the entire injection moulding process the mould is actively heated to an elevated constant temperature, below the melting point of the thermoplastic material.

The terms "actively heated (or active heating)' as used herein shall mean heating with other sources of heat than the heat transferred by the molten thermoplastic material and the consequent heating of heated flow channels.

Active heating does not necessarily have to be supplied to the process for every moment of the process, though it could be. It could be supplied intermittently.

In accordance with the invention the mould should be at an elevated temperature throughout injection moulding process, though that elevated temperature may change as the process progresses. However, preferably according to the first aspect of the invention and in accordance with the second aspect of the invention the elevated temperature is substantially constant throughout the process. Substantially constant shall mean that the mould has a temperature of ± 10°C, more preferably ± 5°C, relative to the target temperature, throughout the method. Preferably, therefore the article is at an elevated temperature when removed from the mould, and cools to ambient temperature. Cooling could be passive - allowing the article to cool in still ambient air - or active, using cooled air or other cooling medium below ambient temperature (also called "chilling" herein) and/or using a flow of air or other cooling medium (which may itself be cooled, or at ambient temperature).

Preferably no active cooling of the mould is applied, such that the mould temperature would drop from a said elevated temperature before ejection of the article.

Surprisingly the method of the present invention has been found to overcome at least some disadvantages normally associated with injection moulding.

Without wishing to be bound by theory it is proposed that in the heated injection moulding mould the flow properties of the injected polymer are improved. This has many beneficial effects. The flow pathways within the mould can be thinner and yet reliable wall formation is still achieved. This has the knock-on benefit that less material is required to form articles, with clear cost savings.

Furthermore it has been found that, in the method of the present invention, the flow passageways can be longer (as well as thinner) than those of the prior art. Thus the mould can be deeper yet still with reliable wall formation.

One advantage of the method of the present invention is that there is greater design freedom from the thinner and/or longer walls produced by the method. This results in the possibility of producing articles with thinner than conventional wall sections e.g. with thicknesses of up to 200µm. It has been found that using the process of the present invention results in the possibility of producing articles of unconventional shapes e.g. with small columns for stability of the product with thinner "plastic films" between these columns. Accordingly it is possible to reduce the weight of articles compared to those produced by conventional techniques without adversely affecting mechanical stability properties.

The improved material flow in the mould according to the present invention can also be used to reduce the injection pressure used compared to conventional techniques. This has an additional benefit in that wear of the injection moulding machine is reduced and/or lower injection moulding pressures may be used which can allow less complicated machinery to be used. This results in lower production costs compared to conventional injection processes. Alternatively more viscous materials can be employed according to the process of the invention which allows for a greater variety of materials to be used than in conventional processes.

Additionally as the mould is heated the thermal shock experienced by the injection moulded material is reduced. Thus brittleness and damage is reduced. Also removal of the article from the mould has been found to be of reduced risk as the (typically still soft) parts display a decreased tendency to break and moreover following removal the formed article can be further manipulated to give it final shape. The mould is heated to a temperature above the glass transition temperature of the material being injection moulded. The mould is heated to a temperature of at least 10°C to 80°C above the glass transition temperature (Tg) of the material being moulded, most preferably to at least 20°C to 70°C above Tg. Tg in this definition is determined by DSC (Differential Scanning Calorimetry) using a Perkin Elmer DSC7 machine. A heating rate of 10°C/min was used. A sample is heated to above its melting point, allowed to cool well below its Tg, and heated again to above its melting point. Alternatively or additionally we may refer to standard test ASTM D 34/8, 1999 (heating rate of 10°C/min) .

Preferably, the mould is heated to a temperature of at least 10°C to 100°C below the melting temperature of the thermoplastic material, most preferably to at least 20°C to 80° below the melting temperature of the material being injection moulded.

The article comprises a PVOH resin. Depending on the material used and the viscosity the material has, the wall thicknesses will change. But experiments have shown that in overall with this process the article possible to produce can be minimum 15% smaller - but up to 45% has been already realised also in tests with this process. So with this method less material consumption, less material costs per article and less waste results in better environmental conditions.

These materials are generally, in known processes, processed using mould temperatures well below the processing temperature of the resin; typically from 100-200°C. The moulds are conventionally heated only by the energy released by the polymer during moulding. Thermoplastic materials according to the invention shall mean materials which do not react in the mould to form new resin structures.

The articles produced in the present invention are (after chilling) generally self-supporting, and have an attractive, uniform appearance which does not vary between different articles. In addition, a wide variety of different shapes and designs are available. Furthermore, the rigid articles can easily have various elements incorporated which are considered to be pleasing to the eye.

As the articles are self-supporting, it is easily possible to introduce two or more compartments, or have larger compartments separated by walls, to separate mutually incompatible ingredients. Furthermore, the article can be moulded in almost any shape that might be useful. In particular it can be given raised or lowered areas.

In order to ensure that the material is capable of being injection moulded, it is usual to incorporate components such as plasticizers, fillers and mould release agents in an amount of up to, for example, 20wt% of the composition. Lubricants may be used, and, where used, in an amount of 0.5 to 5wt%.

The injection moulding composition may also include other components such as colouring agents and components which modify their properties.

Injection moulding techniques are well known to the skilled person and are well described in the literature (see, for example a good summary is provided in "The Wiley Encyclopaedia of Packaging Technology" Wiley Interscience 1986).

It will be recognised that the injection moulding process may comprise a plurality of separate steps. A preferred injection moulding process includes the following steps:
(i) plastification of material to be moulded in an injection unit by heating the material until molten;
(ii) injection of the material into the actively heated mould;
(iii) opening of the mould;
(iv) de-moulding of the article; and
(v) allowing the article to cool, actively or passively (e.g. in a cooling area outside the mould).

The article is suitably soft and pliant when removed from the mould, and its shape can then be changed by mechanical action, then cooled. Once cool, it may be less soft and pliant, i.e. more self-supporting. Its shape may be different from its shape on removal from the mould.

The article walls preferably have thicknesses such that the articles are self-supporting. For example, the outside walls and any inside walls which have been injection moulded independently have a thickness of less than 1mm, for example less than 750µm, 500µm, 300µm, 200µm or 150µm.

Demoulding can generally be designed differently to the classic injection moulding process. Whereby normally the ejection of the article from the mould is done by pushing (e.g. the rim of a beaker) in the process according to the invention demoulding can be done by pulling the moulded article. Pulling shall mean deforming the article (e.g. in a central point) and disengaging the moulded article from the male mould part. The described demoulding process is possible because the moulded article according to the invention is still flexible when demoulding, so no cracking occurs. The demoulding process can be done with pulling without damages on the articles with using the reversible flexibility of the injected material at higher temperatures.

The invention is now further described with reference to the following non-limiting examples.

### Example 1 (Container):

A PVOH resin (Tg = 50-55°C, melting point = 160-170°C) was heated to 180°C and was injected into a mould to form a multi-compartment article with internal dividing walls. The experiment was done on a Battenfeld injection moulding machine. Heating was set to 185°C in the last heating element, hot channels into the mould were set to 190°C, the highest hydraulic pressure of the machine throughout injection was measured as 700 bar (7.1 x 10⁷ Pa). The mould itself was heated to 75°C and maintained at this temperature throughout the injection moulding process. The article was removed from the mould after 12 seconds and was placed to cool to room temperature in still, ambient air.

This process applied repetitively to give one thousand articles.

No articles showed any breakages/incomplete walls.

Following cooling the parts were filled with liquid or granular detergent composition, and had excellent shape retention.

### Comparative Example 1

A PVOH resin (Tg = 50-55°C, melting point = 160-170°C) is heated to 180°C and is injected into a mould to form a multi-compartment article with internal dividing walls. The experiment was done on a Battenfeld injection moulding machine. Heating was set to 185°C in the last heating element. Hot channels into the mould were set to 190°C. The highest hydraulic pressure of the machine throughout injection was measured to be 700 bar (7.1 x 10⁷ Pa). The mould itself was cooled down to room temperature (25°C) and maintained at this temperature throughout the injection moulding process. The article is removed from the mould after 12 seconds and is placed to cool to room temperature.

This process was applied repetitively to give one thousand articles.

In contrast to the article produced in accordance with the method of the present invention it was found that articles produced in accordance with this comparative example stick tightly to the mould and are difficult to de-mould.

2% of the 1000 articles at this comparative example showed breakages. 15% had incomplete walls.

### Example 2 (Process according to the invention)

The article from Example 1 was reproduced with the same outer dimensions and article size, but, all wall thicknesses were reduced equally such that the total weight of the article was reduced by 25%.

A PVOH resin (Tg = 50-55°C, melting point = 160-170°C) was heated to 180°C and was injected into a mould to form a multi-compartment article with internal dividing walls. The experiment was done on a Battenfeld injection moulding machine. Heating was set to 185°C in the last heating element, hot channels into the mould were set to 190°C, the highest hydraulic pressure of the machine throughout injection was measured as 780 bar (7.8 x 10⁷ Pa). The mould itself was heated to 75°C and maintained at this temperature throughout the injection moulding process. The article was removed from the mould after 12 seconds and was placed to cool to room temperature in still, ambient air.

This process was carried out repetitively to produce one thousand articles. No articles showed any breakages/incomplete walls.

Following cooling the articles were filled with liquid or granular detergent composition, and exhibited excellent shape retention when filled.

### Comparative Example 2:

The article from Example 1 was reproduced with the same outer dimensions and article size, but, all wall thicknesses were reduced equally such that the total weight of the article was reduced by 25%.

A PVOH resin (Tg = 50-55°C, melting point = 160-170°C) is heated to 180°C and is injected into a mould to form a multi-compartment article with internal dividing walls. The experiment was done on a Battenfeld injection moulding machine. Heating was set to 185°C in the last heating element. Hot channels into the mould were set to 190°C. The highest hydraulic pressure of the machine throughout injection was measured to be 780 bar (7.8 x 10⁷ Pa). The mould itself was cooled to room temperature (25°C) and maintained at this temperature throughout the injection moulding process. The article is removed from the mould after 12 seconds and is placed to cool to room temperature.

This process was repeated to produce one thousand articles.

In contrast to the article produced in accordance with the method of the present invention (see Example 2 above) the articles produced in accordance with this comparative example stuck tightly to the mould and were difficult to remove from it.

11% of the 1000 articles of Comparative Example 2 showed breakages. All of the articles had incomplete walls.

### Example 3 (process not according to the invention)

The article from Example 1 was reproduced with the same outer dimensions and article size, but, all wall thicknesses were reduced equally such that the total weight of the article was reduced by 36%.

A standard PP (polypropylene) was heated to 220°C and injected into a mould to form a refill (a measuring cup with 11 internal walls to build 12 identical cambers) with a total weight reduction of 36% as detailed above. The process was carried out on a Battenfeld injection moulding machine. Heating was set to 224°C in the last heating element, hot channels into the mould were set to 225°C, the highest hydraulic pressure of the machine throughout injection was measured as 950 bar (9.5 x 10⁷ Pa). The mould itself was heated to 60°C and maintained at this temperature throughout the injection moulding process. The article was removed from the mould after 8 seconds and was placed to cool to room temperature in still, ambient air.

This process was repeated to produce one thousand articles. No articles showed any breakages/incomplete walls. When cooled to ambient the articles of Example 3 were found to exhibit good mechanical properties as well as shape retention properties.

Comparative Example 3 (not in accordance with the present invention):

The article from Example 1 was reproduced with the same outer dimensions and article size, but, all wall thicknesses were reduced equally such that the total weight of the article was reduced by 36%.

A standard PP was heated to 220°C and was injected into a mould to form the refill (a measuring cup with 11 internal walls to build 12 identical cambers) with a total weight reduction of 36%. The experiment was carried out on a Battenfeld injection moulding machine. Heating was set to 224°C in the last heating element, hot channels in the mould were set to 225°C, the highest hydraulic pressure of the machine throughout injection was measured as 950 bar (9.5 x 10⁷ Pa). The mould itself was cooled to room temperature (20°C) and maintained at this temperature throughout the injection moulding process. The article was removed from the mould after 8 seconds and was placed to cool to room temperature.

This process was repeated to produce one thousand articles. In contrast to the article produced in accordance with the method of example 3 above, it was found that articles produced in accordance with comparative Example 3 could not be filled. The injected material was always frozen too early. Furthermore all of the articles were found to have incomplete walls.

### - Example 4 (Process not according to the invention):

A drinking cup was produced with the standard outer dimensions and article size, but, all wall thicknesses were reduced equally such that the total weight of the article was reduced by 18% compared to the standard drinking cup. A standard PE (polyethylene) was heated to 240°C and was injected into a mould to form a standard drinking cup with a total weight reduction of 18%. The experiment was carried out on a Battenfeld injection moulding machine. Heating was set to 255°C in the last heating element, hot channels into the mould were set to 258°C, the highest hydraulic pressure of the machine throughout injection was measured as 840 bar (8.4 x 10⁷ Pa). The mould was heated to 60°C and maintained at this temperature throughout the injection moulding process. The article was removed from the mould after 9 seconds and was placed to cool to room temperature in still, ambient air.

This process was repeated to produce one thousand articles. No articles showed any incomplete walls. Following cooling the cups were tested and their mechanical properties as well as their shape retention properties were found to be excellent.

### Comparative Example 4 (not in accordance with the invention):

The cup of Example 4 above was produced using a conventional process.

A standard PE (Polyethylene) was heated to 240°C and was injected into a mould to form a standard drinking cup with a total weight reduction of 18% compared to conventional drinking cups. The experiment was carried out on a Battenfeld injection moulding machine. Heating was set to 255°C in the last heating element, hot channels into the mould were set to 258°C, the highest hydraulic pressure of the machine throughout injection was measured as 840 bar (8.4 x 10⁷ Pa). The mould was cooled down to room temperature (20°C) and maintained at this temperature throughout the injection moulding process. The article was removed from the mould after 9 seconds and was placed to cool to room temperature in still, ambient air.

This process was repeated to produce one thousand articles. In contrast to the article produced in accordance with the method of Example 4 above, it was found that articles produced in accordance with comparative Example 4 could not be filled. The injected material was always frozen too early. All of the articles had incomplete walls.

### Example 5 (Process not according to the invention):

A bottle closure with dosing cup was produced with the standard outer dimensions and article size, but, all wall thicknesses were reduced equally such that the total weight of the bottle closure was reduced by 23% compared to the standard bottle closure with dosing cup.

A standard PP was heated to 210°C and was injected into a mould to form the bottle closure with dosing cup with a total weight reduction of 23%. The experiment was carried out on a Battenfeld injection moulding machine. Heating was set to 210°C in the last heating element, hot channels into the mould were set to 214°C, the highest hydraulic pressure of the machine throughout injection was measured as 680 bar (6.8 x 10⁷ Pa). The mould was heated to 65°C and maintained at this temperature throughout the injection moulding process. The article was removed from the mould after 11 seconds and was placed to cool to room temperature in still, ambient air. This process was repeated to produce one thousand articles. No articles showed any incomplete walls. Following cooling to ambient, the articles were tested and their mechanical properties as well as their shape retention were found to be excellent.

### Comparative Example 5 (not in accordance with the present invention) :

The bottle closure with dosing cup of Example 5 above was produced using a conventional process.

A standard PP was heated to 210°C and was injected into a mould to form a bottle closure with dosing cup with a total weight reduction of 23%. The experiment was carried out on a Battenfeld injection moulding machine. Heating was set to 210°C in the last heating element, hot channels into the mould were set to 214°C, the highest hydraulic pressure of the machine throughout injection was measured as 680 bar (6.8 x 10⁷ Pa). The mould was cooled down to room temperature (20°C) and maintained at this temperature throughout the injection moulding process. The article was removed from the mould after 11 seconds and was placed to cool to room temperature in still, ambient air.

This process was repeated to produce one thousand articles. In contrast to the article produced in accordance with the method of the Example 5 above, it was found that articles produced in accordance with this comparative example could not be filled. The injected material was always frozen too early. All of the articles had incomplete walls.

## Claims

1. A method of forming an article by injection moulding a molten thermoplastic material into a mould, wherein for or during the injection moulding process the mould is actively heated, the mould being at an elevated temperature, below the melting point of the thermoplastic material, throughout the injection moulding process; wherein the mould is heated to a temperature of at least 10°C to 80°C above the glass transition temperature of the thermoplastic material being injection moulded; wherein the method comprises heating PVOH resin having a glass transition temperature of 50-55 °C and a melting temperature of 160-170°C and injecting it into the mould to form a multi-compartment article with internal dividing walls, wherein the article is a container.

## Patentansprüche

1. Verfahren zur Bildung eines Artikels durch Spritzgießen eines schmelzflüssigen thermoplastischen Materials in eine Form, wobei für den Spritzgussprozess oder während des Spritzgussprozesses die Form aktiv erhitzt wird, wobei sich die Form über den gesamten Spritzgussprozess hinweg bei einer erhöhten Temperatur unterhalb des Schmelzpunkts des thermoplastischen Materials befindet;
wobei die Form auf eine Temperatur von mindestens 10 °C bis 80 °C über der Glasübergangstemperatur des spritzgegossenen thermoplastischen Materials erhitzt wird;
bei dem man PVOH-Harz mit einer Glasübergangstemperatur von 50-55 °C und einer Schmelztemperatur von 160-170 °C erhitzt und in die Form einspritzt, um einen Mehrkammerbehälter mit internen Trennwänden zu bilden, wobei es sich bei dem Artikel um einen Behälter handelt.

## Revendications

1. Procédé de formation d'un article par moulage par injection d'un matériau thermoplastique fondu dans un moule, le moule étant chauffé activement pendant le procédé de moulage par injection ou au cours de celui-ci, le moule étant à une température élevée, inférieure au point de fusion du matériau thermoplastique, durant tout le procédé de moulage par injection ;
le moule étant chauffé jusqu'à une température supérieure d'au moins 10 °C à 80 °C à la température de transition vitreuse du matériau thermoplastique moulé par injection ;
le procédé comprenant le chauffage d'une résine PVAL présentant une température de transition vitreuse de 50 à 55 °C et une température de fusion de 160 à 170 °C et son injection dans le moule afin de former un article à compartiments multiples comportant des parois de séparation intérieures, l'article étant un récipient.
